# EUROPEAN PATENT SPECIFICATION

(11) **EP 1 043 367 B1**
(45) Date of publication and mention of the grant of the patent: **15.01.2003**
(21) Application number: 99106966.7
(22) Date of filing: 09.04.1999
(51) Int. Cl.: C09C 1/50

(54) **Method and plant for manufacturing carbon black**
Verfahren und Vorrichtung zur Herstellung von Russ
Méthode et installation de fabrication de noir de carbone

(43) Date of publication of application: 11.10.2000
(73) Proprietor: Affolter, Jean, 1162 Saint-Prex (CH)
(72) Inventor: Affolter, Jean, 1162 Saint-Prex (CH)
(74) Representative: Kiliaridis, Constantin

(56) References cited:
- US-A- 3 793 438

## Description

This invention relates to a method for manufacturing carbon black by pyrolysis of a feedstock formed of oil containing chemically bound carbon in a reactor. The invention also relates to a carbon black manufacturing plant for carrying out the said method.

According to state of the art manufacture, carbon black is produced from oil having preferably a carbon content over 90% and a BMCI (Bureau of Mines Correlation Index) over 120.

The state of the art oil furnace process has been introduced by Phillips Petroleum in the early forties and a comprehensive review thereof may be found in "Carbon Black", edited by J.B. Donnet, R.C. Bansal and M.J. Wang, published by Marcel Dekker Inc. 1993.

According to this technology, the oil, named the feedstock, is pyrolysed in a reactor specific to that purpose. This reactor, named furnace, operates at a range of temperatures from 1'200 to 1'800° C. The products are carbon black, hydrogen, carbon monoxide and carbon dioxide. The reaction requires an input of heat which is supplied by the combustion of fuel in the furnace, and the combustion gas is mixed to the feedstock. The fuel may be the same oil as used for producing the carbon black, or another type of oil, or a gas. The energy input is in the range of 5 to 15 kWh per kg of carbon black produced, depending on the grade.

This oil furnace process is used nowadays by all carbon black manufacturers, and many refinements have been added to the original reactor. However, despite all development efforts, some of the disadvantages of the first reactor could not be eliminated.

One of the disadvantages is the low yield of the process, although the thermodynamic theory does not predict a limitation which nevertheless appears in the reactors presently used. This may be explained by the fact that the fuel cannot be burned with a stoechiometric amount of air as it should, but an excess must always be used, and a part of the feedstock is also used as a fuel. Another disadvantage is the use of the temperature of the furnace to govern the surface area (square meter per gram) of carbon black; the heat input and therefore the use of fuel requested per unit mass of carbon black produced depends on the surface area aimed at, although the theory does not predict a connection between the enthalpy of reaction and the surface area of the carbon black. Still another disadvantage is that the combustion of the fuel and the pyrolysis of the feedstock cannot be processed in entirely separated zones, an overlapping is unavoidable in nowadays furnaces; as a consequence, a substantial amount of feedstock and fuel is combusted under stoechiometric condition, and carbon monoxide is produced instead of carbon dioxide. As the combustion to carbon monoxide produces a smaller amount of heat than combustion to carbon dioxide, more fuel and feedstock must be used by comparison to an ideal reactor where combustion and pyrolysis could be performed separately. The carbon monoxide cannot be released into the environment because ot its toxicity, and the recovery of its residual heat upon combustion is an economical necessity; accordingly, the carbon black plants are presently equipped with a post-combustion unit and a heat recovery system which are a substantial part of the investment. And the oil furnace process releases after the post-combustion unit a large amount of carbon dioxide which contributes to the global warming up.

It is an object of this invention to propose a method and plant for manufacturing a high quality carbon black by pyrolysis which avoid the aforesaid drawbacks, and which are versatile, energy saving, environmentally efficient, and economical.

To this effect, the method for manufacturing carbon black by pyrolysis of a feedstock formed of oil containing chemically bound carbon in a reactor, is characterized by the steps of electrically heating the reactor, heating up the feedstock over its vaporisation temperature, injecting the vaporised feedstock into

the heated reactor, forming electric sparks in the area where the vaporised feedstock is injected into the reactor to ionize the vaporised feedstock before pyrolysis thereof, pyrolysing the ionized vaporised feedstock by radiant energy provided by the electrically heated reactor whereby carbon black and a gas containing mainly hydrogen are produced and monitoring the surface area of the carbon black by the power of the electric current generating the sparks. Accordingly, no fuel is required for driving the reaction, no carbon monoxide and carbon dioxide are produced by the reaction. The energy input is low and close to the theoretical pyrolysis enthalpy of the feedstock and a wide range of feedstock grades may be accepted.

It is possible to operate at high temperatures, in which case the carbon black has an enhanced crystal structure and improved conductivity of electricity.

Forming electric sparks after the injection point of the feedstock in the space where the feedstock is vaporised and not yet pyrolysed increases the surface area of the carbon black, with all other adjustments remaining unchanged, this being due to the increase of the number of ionized particles in the gas mixture, in particular the positively charged carbon species. By adjusting the electric potential difference (Volt), current flow (Ampere), length of gap between the equipment forming the electric sparks, it is possible to adjust the surface area of the carbon black. A wide range of grades of carbon black with different surface area may be produced with a constant reactor temperature and varying the potential difference and the current flow of the equipment forming the electric sparks. It is possible to operate with a lesser expenditure of energy per mass of produced carbon black (kWh/Kg) as with a state of the art furnace where the surface area of the carbon black is controlled by the temperature of the said furnace. Furthermore, the possibility to operate in a higher temperature range with an electrically heated reactor makes it also possible to use a larger feedstock range: it has been noticed that grades with a BMCI below 100 were also converted without carbon loss to carbon black, and the same grades of carbon black as with regular feedstock were obtained, minor changes of operation parameters being only necessary. Practically, it has been found that controlling the surface area in the range of 20 to 200 square meters per gram is possible. The power required for the electric sparks is about 1% of the power for heating the reactor. It is important to note that the carbon black may also be produced by the so-called plasma process which is state of the art; in this plasma process, a gaseous stream of hydrocarbons is pyrolysed by the energy supplied by an elecrtric arc only. The energy requirement of the plasma process is in the range of 5 to 15 kWh/kg carbon black, whereas in the process according to the invention the energy requirement is about 2 kWh/kg carbon black only.

It is well known that the structure measured in ml n-dibutylphtalate (DBP) absorbed per 100 gram of carbon black is governed by the temperature versus time curve experienced by the carbon black after the formation of the primary particles. If the carbon black is maintained a long time referred to the process at a high temperature, a carbon black with a high structure is obtained, and conversely a short time yields a low structure. The temperature versus time curve may be controlled in several ways. One of them is to vary the length of the heated part of the reactor, the longer this part the higher the structure. However, using this parameter for controlling the structure is not practical, and best is to adjust he length of the heated part of the reactor to a value in the middle of the aimed at range, all other adjustable parameters being also in the middle of their own range; for example, 90 ml DBP/100 g is a good value to select for producing rubber carbon black. It has been found practically that adjustment of the pressure in the reactor in the range of 0.5 to 0.9 bar (abs) is sufficient for monitoring the structure over a range from 40 to 140 ml DBP/100 g.

The theoretical heat input for driving the reaction is 1.65 kWh/kg carbon black at 1'800° C, and practically values below 2 kWh/kg have been found.

The method may further comprise the step of adding a make-up gas into the reactor, which make-up gas may be nitrogen, or argon, or carbon dioxide. This makes it possible to influence the structure, although not indispensable for producing most of the current grades used by the rubber industry.

Preferably, the reactor is heated by electricity from the outside.

The temperature is adjusted in the range from 1'000° C to 2'500° C. Over 2'000° C, carbon black grades with high surface areas, above 200 m²/g, may be produced. Furthermore the graphitization of primary carbon particles is also improved, and the same with the electric conductivity.

Preferably, the pressure within the reactor is adjusted at less than 1 bar (abs) to control the structure as explained hereabove. Furthermore, this reduced pressure makes it that the gas containing hydrogen produced by the pyrolysis acts as a carrier gas and sweeps the carbon black off the reactor.

Advantageously, the method further comprises the step of dispersing the carbon black in a water jet at an outlet of the reactor. This is a convenient way to separate the carbon black from the gas without using filters. In addition, the water jet performs several functions, namely, it disperses the carbon black into water and separates it from the gas, it monitors the pressure to a set value, and it acts as a quench, i.e., it stops the reaction of structure growth of the carbon black by cooling.

The water jet may contain a surfactant, preferably of the class of alkylarylsulfonates, alkane sulfonates, ethylene oxides, or alcohol ether sulfate compounds to lower the surface tension of the water.

Preferably, the method further comprises the step of centrifuging the carbon black for separating it from the water. With a dispersion of one part carbon black for approximately hundred parts water before centritugation, a dispersion of one part carbon black for point five to one part water may be achieved after centrifugation. The centrifugation process may therefore be adjusted in a way that the residual content of water in the carbon black is the amount which is requested for pelletizing it. Pelletization is standard part of the state of the art and needs no further explanation.

Where the method further comprises the step of directing the gas containing hydrogen through an adsorbing surface wetted with water, solid particles are prevented from remaining in the gas containing hydrogen.

Preferably, the method further comprises the step of recovering the hydrogen via a permeation membrane, to take advantage from the fact that hydrogen has a small molecular weight which makes it easy to separate from the other components of the gas by permeation for being recuperated.

The carbon black manufacturing plant for carrying out the aforesaid method comprises, in combination, a reactor having an inlet and an outlet, electrical means for heating the reactor, injector means at the inlet, conduit means for supplying said injector means with a feedstock formed of oil containing chemically bound carbon, means for heating said feedstock over its vaporisation temperature along said conduit means, and spark generating electrodes arranged in the reactor in the vicinity of said injector means.

Preferably, the reactor is formed by a straight pipe, which is advantageously made of a refractory material such as ceramic, for example a ceramic containing aluminum oxide, or beryllium oxide, or magnesium oxide, or a mixture thereof, or the reactor may still be made of graphite to allow temperatures reaching 2'500°C.

Advantageously, said electrical means for heating the reactor are arranged outside the reactor, and the reactor is placed in a gas tight container enclosing said reactor and electrical means. With gas conduit means connected to said gas tight container for flushing an innert gas into the gas tight container, the electrical means heating the reactor are protected from the oxygen of air.

The plant may further comprise a dispersing vat connected to the outlet of said reactor and first water supply means connected to said dispersing vat.

Advantageously, the dispersing vat is connected to a centrifuge which may be connected to said first water supply means via a pump and a heat exchanger.

In a preferred embodiment, the vat comprises a first chamber connected to said outlet and to said water supply means, a second chamber connected to said first chamber and to said centrifuge, a third chamber connected to said second chamber, said third chamber comprising an adsorbing surface and second water supply means for wetting said adsorbing surface. Advantageously, said second water supply means are fed via a connection between said first water supply means and said heat exchanger, whereas said third chamber may be connected to a separator unit comprising a permeation membrane, and said third chamber may be connected to the separator unit via a vacuum pump.

These and other objects, features and advantages of the invention will become readily apparent from the following detailled description with reference to the accompanying drawing which shows, diagrammatically and by way of example only, a preferred but still ilustrative embodiment of the invention.

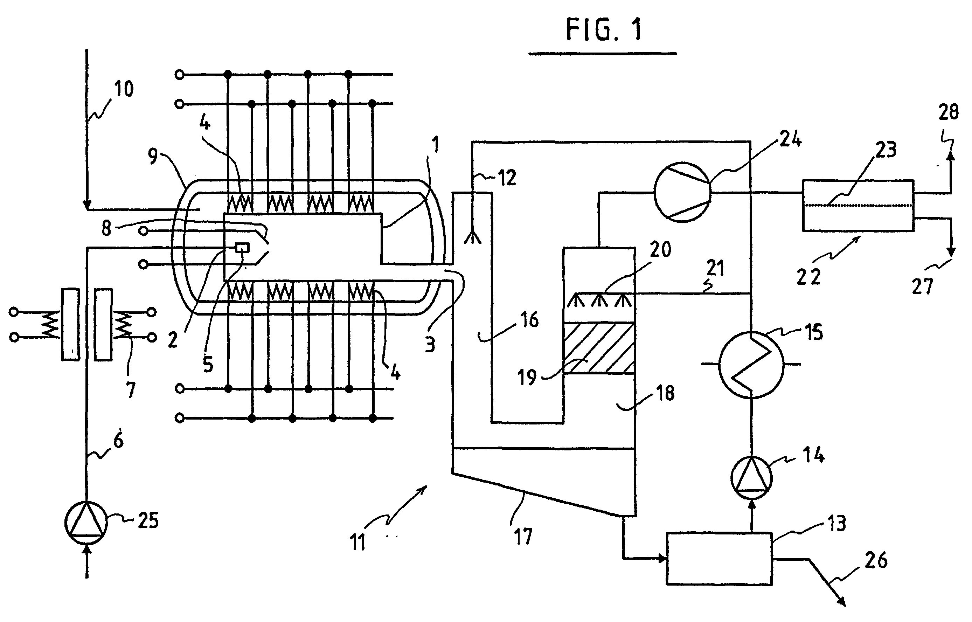

Figure 1 is a diagrammatic view of the plant according to the invention.

The plant shown comprises a reactor 1 in the form of a straight pipe having an inlet 2 and an outlet 3. This reactor 1 is made of a refractory material such as a ceramic containing, for example, aluminum oxide, or berillium oxide, or magnesium oxide, or a mixture thereof. The reactor may also be made of graphite.

Around the reactor 1 are arranged electrical heating means 4 connected to a power supply (not shown).

A gas tight container 9 encloses the reactor 1 and the electrical heating means 4. A conduit 10 is connected to the container for flushing an innert gas into the container to protect the heating means 4 from the oxygen of air.

An injector 5 is affixed in the inlet 2 of the reactor 1. This injector 5 is connected to a conduit 6 for supplying the injector with a feedstock formed of oil containing chemically bound carbon via a pump 25. Around the conduit 6 are arranged electrical heating means 7 for heating up the feedstock in the conduit 6 over its vaporisation temperature. The electrical heating means 7 are connected to a power supply (not shown).

Spark generating electrodes 8 are arranged in the reactor 1 in the vicinity of the injector 5, after the point of injection of the feedstock. Electrodes 8 are connected to a power supply (not shown).

A dispersing vat 11 is connected to the outlet 3 of the reactor 1 and first water supply means 12 are connected to the dispersing vat 11 which is connected to a centrifuge 13 which is connected itself to the first water supply means 12 via a pump 14 and a heat exchanger 15.

In the example shown, the vat 11 is U shaped and comprises a first vertical chamber 16 connected to the outlet 3 and to the first water supply means 12, a second substantially inclined chamber 17 connected to the first chamber 16 and to the centrifuge 13, and a third vertical chamber 18 connected to the second chamber 17.

An adsorbing surface 19 is arranged in the third chamber 18 and second water supply means 20 are placed over the adsorbing surface 19 for wetting it. As shown, the second water supply means 20 are fed by a connection 21 between the first water supply means 12 and the heat exchanger 15.

The third chamber 18 is connected via a vacuum pump 24 to a separator unit 22 comprising a permeation membrane 23.

Accordingly, operation of the plant is the following : the reactor 1 is heated, and the feedstock heated over its vaporisation temperature is injected into the heated reactor; the electrodes 8 generate electric sparks in the area where the vaporised feedstock is injected into the reactor and ionize the vaporised feedstock before pyrolysis thereof; the ionized vaporised feedstock takes up the radiant energy of the reactor and undergoes a pyrolysis reaction, whereby carbon black and a gas containing mainly hydrogen are produced. Under the depression created by vacuum pump 24 the carbon black is dispersed in the water of vat 11 where it can be centrifuged and recovered as at 26, whereas the gas containing hydrogen is driven through the adsorbing surface 19 towards the separator unit 22 where the hydrogen passes through membrane 23 to be recovered as at 27 while the residual gas exits at 28.

## Claims

1. A method for manufacturing carbon black by pyrolysis of a feedstock formed of oil containing chemically bound carbon in an electrically heated reactor **characterized by** the steps of:
- heating up the feedstock over its vaporisation temperature;
- injecting the vaporised feedstock into the heated reactor;
- forming electric sparks in a portion of space close to the point of injection of the vaporised feedstock into the reactor, the said electric sparks ionizing the said vaporised feedstock, which has not reacted yet, the said electric sparks at this place having the property to increase the surface area of the carbon black formed;
- pyrolysing the ionized vaporised feedstock by radiant energy provided by the electrically heated reactor whereby carbon black and a gas containing mainly hydrogen are produced and
- monitoring the surface area of the carbon black by the power of the electric current generating the sparks.

2. A method according to claim 1, further comprising the step of adding a make-up gas into the reactor.

3. A method according to claim 2, wherein the make-up gas is nitrogen, or argon, or carbon dioxide.

4. A method according to claim 1, wherein the reactor is heated by electricity from the outside.

5. A method according to claim 1, wherein the temperature in the reactor may be varied in the range from 1'000° C to 2'500° C.

6. A method according to claim 1, wherein pressure within the reactor is adjusted at less than 1 bar (abs).

7. A method according to claim 1, further comprising the step of dispersing the carbon black in a water jet at an outlet of the reactor.

8. A method according to claim 7, wherein the water jet contains a surfactant.

9. A method according to claim 8, wherein the surfactant is of the class of alkylarylsulfonates, alkane sulfonates, ethylene oxides, or alcohol ether sulfate compounds.

10. A method according to claim 7, further comprising the step of centrifuging the carbon black for separating it from the water.

11. A method according to claim 1 or claim 2, further comprising the step of directing the gas containing hydrogen through an adsorbing surface wetted with water.

12. A method according to claim 1 or claim 2, further comprising the step of recovering the hydrogen via a permeation membrane.

13. A carbon black manufacturing plant for carrying out the method of claim 1 comprising, in combination, a reactor (1) having an inlet (2) and an outlet (3), electrical means (4) for heating the reactor, injector means (5) at the inlet (2), conduit means (6) for supplying said injector means (5) with a feedstock formed of oil containing chemically bound carbon, means (7) for heating said feedstock over its vaporisation temperature along said conduit means (6), and spark generating electrodes (8) arranged in the reactor (1) in the vicinity of said injector means (5).

14. A plant according to claim 13, wherein the reactor (1) is formed by a straight pipe.

15. A plant according to claim 14, wherein the reactor (1) is made of a refractory material.

16. A plant according to claim 15, wherein the reactor (1) is made of ceramic.

17. A plant according to claim 16, wherein the reactor (1) is made of a ceramic containing aluminum oxide, or beryllium oxide, or magnesium oxide, or a mixture thereof.

18. A plant according to claim 15, wherein the reactor (1) is made of graphite.

19. A plant according to claim 13, wherein said said electrical means (4) for heating the reactor (1) are arranged outside the reactor.

20. A plant according to claim 19, further comprising a gas tight container (9) enclosing said reactor (1) and electrical means (4).

21. A plant according to claim 20, further comprising gas conduit means (10) connected to said gas tight container (9) for flushing an innert gas into said gas tight container (9).

22. A plant according to claim 13, further comprising a dispersing vat (11) connected to the outlet (3) of said reactor (1) and first water supply means (12) connected to said dispersing vat (11).

23. A plant according to claim 22, wherein said dispersing vat (11) is connected to a centrifuge (13).

24. A plant according to claim 23, wherein said centrifuge (13) is connected to said first water supply means (12) via a pump (14) and a heat exchanger (15).

25. A plant according to claim 24, wherein said vat (11) comprises a first chamber (16) connected to said outlet (3) and to said water supply means (12), a second chamber (17) connected to said first chamber (16) and to said centrifuge (13), a third chamber (18) connected to said second chamber (17), said third chamber (18) comprising an adsorbing surface (19) and second water supply means (20) for wetting said adsorbing surface.

26. A plant according to claim 25, wherein said second water supply means (20) are fed via a connection (21) between said first water supply means (12) and said heat exchanger (15).

27. A plant according to claim 26, wherein said third chamber (18) is connected to a separator unit (22) comprising a permeation membrane (23).

28. A plant according to claim 27, wherein said third chamber (18) is connected to the separator unit (22) via a vacuum pump (24).

## Revendications

1. Procédé de fabrication de noir de carbone par pyrolyse d'une matière première formée d'huile contenant du carbone lié chimiquement dans un réacteur chauffé électriquement, **caractérisé par** les étapes :
- chauffer la matière première au-delà de sa température de vaporisation;
- injecter la matière première vaporisée dans le réacteur chauffé;
- former des étincelles électriques dans une partie de l'espace proche du point d'injection de la matière première vaporisée dans le réacteur, lesdites étincelles électriques ionisant ladite matière première vaporisée, qui n'a pas encore réagi, lesdites étincelles électriques à cet endroit ayant la propriété d'augmenter la superficie du noir de carbone formé;
- pyrolyser la matière première vaporisée et ionisée par rayonnement pourvu par un réacteur chauffé électriquement par lequel sont produits du noir de carbone et un gaz contenant principalement de l'hydrogène et
- en surveillant la superficie du noir de carbone par la puissance du courant électrique générant les étincelles.

2. Procédé selon la revendication 1, comprenant en plus l'étape d'adjonction d'un gaz complémentaire dans le réacteur.

3. Procédé selon la revendication 2, **caractérisé en ce que** le gaz complémentaire est de l'azote, ou de l'argon, ou du dioxyde de carbone.

4. Procédé selon la revendication 1, **caractérisé en ce que** le réacteur est chauffé par l'électricité de l'extérieur.

5. Procédé selon la revendication 1, **caractérisé en ce que** la température du réacteur peut varier dans la gamme allant de 1000°C à 2500°C.

6. Procédé selon la revendication 1, **caractérisé en ce que** la pression dans le réacteur est ajustée à moins de 1 bar (abs).

7. Procédé selon la revendication 1, comprenant en plus l'étape de dispersion du noir de carbone dans un jet d'eau à une sortie du réacteur.

8. Procédé selon la revendication 7, **caractérisé par le fait que** le jet d'eau contient un surfactant.

9. Procédé selon la revendication 8, **caractérisé en ce que** le surfactant est de la classe de alkylarylsulfonates, de sulfonate d'alkane, des oxydes d'éthylène, ou des sulfates d'éther d'alcool.

10. Procédé selon la revendication 7, comprenant en plus l'étape de centrifugation du noir de carbone pour le séparer de l'eau.

11. Procédé selon la revendication 1 ou 2, comprenant en plus l'étape de diriger le gaz contenant l'hydrogène à travers une surface d'adsorption mouillée avec de l'eau.

12. Procédé selon la revendication 1 ou 2, comprenant en plus l'étape de récupération de l'hydrogène à travers une membrane perméable.

13. Installation de fabrication de noir de carbone pour la mise en ouvre du procédé selon la revendication 1, comprenant, en combinaison, un réacteur (1) ayant une entrée (2) et une sortie (3), des moyens électriques (4) pour chauffer le réacteur, des moyens d'injection (5) à l'entrée (2), des moyens conducteurs (6) pour l'alimentation desdits moyens d'injection (5) avec une matière première formée d'huile contenant du carbone lié chimiquement, des moyens (7) pour chauffer ladite matière première au-delà de sa température de vaporisation le long desdits moyens conducteurs (6), et des électrodes (8) de génération d'étincelles disposées dans le réacteur (1) à proximité desdits moyens d'injection (5).

14. Installation selon la revendication 13, **caractérisée en ce que** le réacteur (1) est formé par un tube droit.

15. Installation selon la revendication 14, **caractérisée en ce que** le réacteur 1 est fait d'un matériau réfractaire.

16. Installation selon la revendication 15, **caractérisée en ce que** le réacteur (1) est fait en céramique.

17. Installation selon la revendication 16, **caractérisée en ce que** le réacteur (1) est fait d'un céramique contenant de l'oxyde d'aluminium, ou de l'oxyde de beryllium ou de l'oxyde de magnésium ou un mélange de ces produits.

18. Installation selon la revendication 15, **caractérisée en ce que** le réacteur est fait en graphite.

19. Installation selon la revendication 13, **caractérisée en ce que** les moyens électriques (4) pour chauffer le réacteur (1) sont disposés à l'extérieur du réacteur.

20. Installation selon la revendication 19, comprenant en plus un conteneur (9) étanche au gaz entourant ledit réacteur (1) et des moyens électriques (4).

21. Installation selon la revendication 20, comprenant en plus des moyens conducteurs de gaz (10) connectés audit conteneur (9) étanche au gaz pour chasser un gaz inerte dans ledit conteneur (9) étanche au gaz.

22. Installation selon la revendication 13, comprenant en plus une cuve (11) de dispersion connectée à la sortie (3) du réacteur (1) et des premiers moyens d'alimentation (12) en eau connectés à ladite cuve de dispersion (11).

23. Installation selon la revendication 22, **caractérisée en ce que** ladite cuve de dispersion (11) est connectée à une centrifugeuse (13).

24. Installation selon la revendication 23, **caractérisée en ce que** la centrifugeuse (13) est connectée audit premier moyen d'alimentation en eau (12) à travers une pompe (14) et un échangeur de chaleur (15).

25. Installation selon la revendication 24, **caractérisée en ce que** ladite cuve (11) comprend une première chambre (16) connectée à ladite sortie (3) et auxdits moyens d'alimentation en eau (12), une deuxième chambre (17) connectée à ladite première chambre (16) et à ladite centrifugeuse (13), une troisième chambre (18) connectée à ladite deuxième chambre (17), ladite troisième chambre (18) comprenant une surface d'adsorption (19) et des deuxièmes moyens d'alimentation en eau (20) pour mouiller ladite surface d'adsorption.

26. Installation selon la revendication 25, **caractérisée en ce que** lesdits deuxièmes moyens d'alimentation en eau (20) sont alimentés à travers une connexion (21) entre lesdits premiers moyens d'alimentation en eau et ledit échangeur de chaleur (15).

27. Installation selon la revendication 26, **caractérisée en ce que** ladite troisième chambre (18) est connectée en une unité de séparation (22) comprenant une membrane (23) perméable.

28. Installation selon la revendication 27, **caractérisée en ce que** la troisième chambre (18) est connectée à l'unité de séparation (22) à travers une pompe à vide (24).

## Patentansprüche

1. Verfahren zur Herstellung von Russ durch Pyrolyse eines Ausgangsmaterials, welches aus Öl besteht, das chemisch gebundenen Kohlenstoff enthält, in einem elektrisch beheizten Reaktor, **gekennzeichnet durch** die folgenden Schritte:
- Erhitzen des Ausgangsmaterials über seine Verdampfungstemperatur;
- Einleiten des verdampften Ausgangsmaterials in den erhitzten Reaktor;
- Bildung elektrischer Funken in einem Raumbereich, der nahe der Stelle liegt, an der das verdampfte Ausgangsmaterial in den Reaktor eingeleitet wird, wobei die elektrischen Funken das genannte verdampfte Ausgangsmaterial, welches noch nicht reagiert hat, ionisieren, und wobei die genannten elektrischen Funken an dieser Stelle die Eigenschaft haben, die Oberfläche des gebildeten Russes zu erhöhen;
- thermische Zersetzung des ionisierten verdampften Ausgangsmaterials **durch** Strahlungsenergie, die vom elektrisch beheizten Reaktor geliefert wird, wobei Russ und ein Gas erzeugt werden, das hauptsächlich Wasserstoff enthält; und
- Steuerung der Oberflächengrösse des Russes **durch** die Leistung des elektrischen Stromes, der die Funken erzeugt.

2. Verfahren nach Anspruch 1, bei dem weiterhin ein Zusatzgas in den Reaktor eingeleitet wird.

3. Verfahren nach Anspruch 2, bei dem das Zusatzgas Stickstoff oder Argon oder Kohlendioxid ist.

4. Verfahren nach Anspruch 1, bei dem der Reaktor elektrisch von der Aussenseite her beheizt wird.

5. Verfahren nach Anspruch 1, bei dem die Temperatur im Reaktor im Bereich von 1000°C bis 2500°C veränderbar ist.

6. Verfahren nach Anspruch 1, bei dem der Druck im Reaktor auf einen Wert von weniger als 1 bar abs. eingestellt wird.

7. Verfahren nach Anspruch 1, bei dem weiterhin der Russ an einem Ausgang des Reaktors in einem Wasserstrahl dispergiert wird.

8. Verfahren nach Anspruch 7, bei dem der Wasserstrahl ein oberflächenaktives Mittel enthält.

9. Verfahren nach Anspruch 8, bei dem das oberflächenaktive Mittel der Klasse der Alkylarylsulfonate, Alkansulfonate, Ethylenoxide oder Alkoholethersulfatverbindungen angehört.

10. Verfahren nach Anspruch 7, bei dem weiterhin der Russ zwecks dessen Trennung vom Wasser zentrifugiert wird.

11. Verfahren nach Anspruch 1 oder 2, bei dem weiterhin das wasserstoffhaltige Gas durch eine adsorbierende Fläche, die mit Wasser benetzt ist, geleitet wird.

12. Verfahren nach Anspruch 1 oder 2, bei dem weiterhin der Wasserstoff durch eine Permeationsmembran gewonnen wird.

13. Russherstellungsanlage zur Ausführung des Verfahrens gemäss Anspruch 1, welche in Kombination einen Reaktor (1) mit einem Eingang (2) und einem Ausgang (3), elektrische Mittel (4) zum Beheizen des Reaktors, Injektormittel (5) am Eingang (2), Leitungsmittel (6) zur Zufuhr eines Ausgangsmaterials aus chemisch gebundenen Kohlenstoff enthaltendem Öl zu den genannten Injektormitteln (5), Mittel (7) zum Erhitzen des genannten Ausgangsmaterials über dessen Verdampfungstemperatur längs der genannten Leitungsmittel (6), und funkenerzeugende Elektroden (8), die im Reaktor (I) in der Nähe der genannten Injektormittel (5) angeordnet sind, enthält.

14. Anlage nach Anspruch 13, bei der der Reaktor (1) durch ein gerades Rohr gebildet wird.

15. Anlage nach Anspruch 14, bei der der Reaktor (1) aus einem feuerfesten Material hergestellt ist.

16. Anlage nach Anspruch 15, bei der der Reaktor (1) aus Keramik hergestellt ist.

17. Anlage nach Anspruch 16, bei der der Reaktor (1) aus einem keramischen Werkstoff hergestellt ist, welcher Aluminiumoxid oder Berylliumoxid oder Magnesiumoxid oder eine Mischung dieser Stoffe enthält.

18. Anlage nach Anspruch 15, bei der der Reaktor (1) aus Graphit hergestellt ist.

19. Anlage nach Anspruch 13, bei der die genannten elektrischen Mittel (4) zum Beheizen des Reaktors (1) ausserhalb des Reaktors angeordnet sind.

20. Anlage nach Anspruch 19, bei der weiterhin ein gasdichter Behälter (9), welcher den genannten Reaktor (1) und die elektrischen Mittel (4) umschliesst, vorgesehen ist.

21. Anlage nach Anspruch 20, welche weiterhin Gasleitungsmittel (10) aufweist, die mit dem genannten gasdichten Behälter (9) verbunden sind, um den genannten gasdichten Behälter (9) mit einem Inertgas zu spülen.

22. Anlage nach Anspruch 13, welche weiterhin einen Dispersionskübel (11) aufweist, der mit dem Ausgang (3) des genannten Reaktors (1) verbunden ist, sowie erste Wasserzufuhrmittel (12), die an den genannten Dispersionskübel (11) angeschlossen sind.

23. Anlage nach Anspruch 22, bei der der genannte Dispersionskübel (11) mit einer Zentrifuge (13) verbunden ist.

24. Anlage nach Anspruch 23, bei der die genannte Zentrifuge (13) mit den genannten ersten Wasserzufuhrmitteln (12) über eine Pumpe (14) und einem Wärmeaustauscher (15) verbunden ist.

25. Anlage nach Anspruch 14, bei der der genannte Kübel (11) eine ersten Kammer (16) aufweist, welche mit dem genannten Ausgang (3) und den genannten Wasserzufuhrmitteln (12) verbunden ist, eine zweite Kammer (17), die mit der genannten ersten Kammer (16) und der genannten Zentrifuge (13) verbunden ist, eine dritte Kammer (18), die mit der genannten zweiten Kammer (17) verbunden ist, wobei die genannte dritte Kammer (18) eine adsorbierende Fläche (19) und zweite Wasserzufuhrmittel (20) zum Benetzen der genannten adsorbierenden Fläche aufweist.

26. Anlage nach Anspruch 25, bei der die genannten zweiten Wasserzufuhrmittel (20) über eine Verbindung (21) zwischen den genannten ersten Wasserzufuhrmitteln (12) und dem genannten Wärmeaustauscher (15) angeschlossen sind.

27. Anlage nach Anspruch 26, bei der die genannte dritte Kammer (18) mit einer Separatoreinheit (22) verbunden ist, die eine Permeationsmembran (23) aufweist.

28. Anlage nach Anspruch 27, bei der die genannte dritte Kammer (18) über eine Vakuumpumpe (24) mit der Trenneinheit (22) verbunden ist.
